# DEMANDE DE BREVET EUROPEEN

(11) **EP 4 389 812 A1**
(43) Date de publication de la demande: **26.06.2024**
(21) Numéro de dépôt: 23218740.1
(22) Date de dépôt: 20.12.2023
(51) Int. Cl.: C08K 5/521, C08K 5/523

(54) **COMPOSITION THERMOPLASTIQUE À BASE DE POLYCARBONATE ET UTILISATIONS**

(30) Priorité: 21.12.2022 FR 2214130
(71) Demandeur: Epsotech France, 69830 Saint-Georges-De- Reneins (FR); Centre National de la Recherche Scientifique, 75016 Paris (FR); UNIVERSITE CLAUDE BERNARD - LYON 1, 69100 Villeurbanne (FR); Université Jean Monnet Saint-Étienne, 42100 Saint-Étienne (FR); Institut National des Sciences Appliquees de Lyon (Insa Lyon), 69100 Villeurbanne (FR)
(72) Inventeur: BRUNEL, Raphaël, 69200 Venissieux (FR); BOUNOR-LEGARE, Véronique, 69006 Lyon (FR); GALY, Jocelyne, 69004 Lyon (FR); DELAGE, Karim, 69100 Villeurbanne (FR); GUICHARD, Bryan, 44330 La Regrippiere (FR); MULOT, Benjamin, 69100 Villeurbanne (FR); VANGREVELYNGHE, Mathieu, 31330 Grenade (FR); DUQUESNE, Sophie, 59350 Saint Andre Lez Lille (FR); SAMYN, Fabienne, 59290 Wasquehal (FR); MAKHLOUF, Lotfi, 59130 Lambersart (FR)
(74) Mandataire: Germain Maureau

(57) **Abrégé**

L'invention concerne une composition thermoplastique comprenant au moins :
a) une résine à base de polycarbonate(s), en une teneur de 60-70% (m/m) par rapport à la composition ;
b) un retardateur de flamme comprenant du phosphore choisi parmi les esters de phosphate aromatiques et leurs mélanges, présent(s) en une teneur de 5-15% en masse par rapport à la masse de la composition ;
c) un ou des polyorganosiloxanes, présent(s) en une teneur de 7-15% (m/m) par rapport à la composition; et
d) une charge inorganique à base de talc possédant un diamètre moyen D50 de 1-12 µm, mesuré par une méthode de sédimentation par gravité telle que définie dans la norme ISO 13317-3, ladite charge inorganique étant présente en une teneur de 15-20% (m/m) par rapport à la composition,
et ses applications, notamment dans l'équipement des véhicules ferroviaires.

## Description

L'invention concerne une composition de résine thermoplastique à base de polycarbonate et ses utilisations notamment dans l'aménagement intérieur des trains.

Dans le texte ci-dessous, elle est en particulier présentée en référence à l'industrie ferroviaire mais ne s'y trouve pas limitée, et peut s'étendre à tout secteur requérant, pour ses équipements, des exigences mécaniques et anti-feu sévères.

Les impératifs de sécurité, de confort, de design, économiques, énergétiques, environnementaux, dans le transport de passagers, nécessitent de nombreuses installations plus ou moins complexes parmi lesquelles figurent les revêtements de parois des différentes structures d'un train, parois latérales, portes, plafond, sol, sièges, tous les accessoires comme les tablettes, porte-bagages... Le matériel doit posséder des propriétés mécaniques de résistance aux chocs dans le contexte d'usage tout en étant léger, il doit aussi satisfaire des normes anti-feu. Ces dernières évoluent encore vers plus de rigueur, notamment vis-à-vis des risques d'incendie sous un tunnel dont l'issue est souvent tragique en raison du confinement.

Ainsi, la norme européenne EN 45545 relative à la protection contre les incendies dans les véhicules ferroviaires (trains à grande vitesse, trains régionaux, tramways, métros) qui définit les exigences relatives, entre autres, aux matériaux des équipements est devenue obligatoire. Dans sa seconde partie (EN 45545-2), elle définit plusieurs catégories en fonction des applications et risques d'incendie, la présente invention correspondant à R1 (application aux surfaces intérieures) et HL2 (risques d'incendie associés) et, dans cette catégorie R1HL2, elle encadre les paramètres suivants : propagation des flammes (CFE pour Critical heat Flux at Extinguishment / Flux de chaleur Critique à l'Extinction, mesuré selon la norme ISO 5658-2), dégagement de chaleur (indice MAHRE, mesuré selon la norme ISO 5660-1), opacité des fumées (Ds₍₄ₘᵢₙ₎, VOF₄ et CIT mesurés selon la norme ISO 5659-2).

Ainsi dans cette norme pour être dans la catégorie R1HL2, les valeurs suivantes doivent être atteintes :
- Un MAHRE maximum de 90 kW/m².
- Un CFE minimum de 20 kW/m².
- Un Ds₍₄ₘᵢₙ₎ maximum à 300, un VOF₄ maximum de 600 et un CIT_{g} maximum de 0,9.

S'agissant des niveaux les plus élevés, il est difficile d'y parvenir sans compromettre certaines propriétés mécaniques du matériau comme par exemple sa résistance aux chocs.

Selon le document EP3882304A1, il est décrit une feuille de résine destinée à la fabrication d'équipement intérieur dans le domaine du transport, ladite feuille comprenant
- une résine d'un polycarbonate aromatique en une teneur de préférence d'au moins 50% (m/m) par rapport à la plaque ;
- un ou plusieurs agents ignifugeants comprenant du phosphore, présent(s) en une teneur de préférence d'au moins 2% (m/m) par rapport à la plaque ;
- un composé contenant un atome de silicium présent en une teneur d'au moins 1% (m/m) par rapport à la plaque; et
- une charge inorganique qui peut être un talc, présente en une teneur de préférence d'au moins 8% (m/m) par rapport à la plaque.

Une telle composition présente des propriétés anti-feu qui ont été évaluées en mesurant le paramètre MAHRE précité. Cet indice est de l'ordre de 130 à 140 kW/m², soit d'une valeur très supérieure à la valeur maximale de 90 kW/m² prescrite dans la norme EN 45545-2.

US2021/0115248A1 décrit une composition pour la fabrication de pièces moulées notamment à destination du secteur ferroviaire comprenant :
(A) un polycarbonate ou polyestercarbonate aromatique en une teneur de 50-90% (m/m) par rapport à la composition ;
(B) un polymère greffé modifié par du caoutchouc ; il peut s'agir d'un polymère ABS, il peut aussi être obtenu à partir d'un monomère vinylique et d'élastomère silicone/acrylate ;
(C) du nitrure de bore en une teneur de 5-10% (m/m) par rapport à la composition ;
(D) un talc présent en une teneur de 4-20% (m/m) par rapport à la composition ;
(E) un ou plusieurs agents ignifugeants comprenant du phosphore, présent(s) en une teneur de préférence de 2-20% (m/m) par rapport à la composition.

Des exemples de pièces moulées fabriquées à partir de compositions répondant à la définition ci-dessus présentent des indices MAHRE (≤ 90 kW/m²), Ds(4) (≤ 300) et VOF 4 (≤ 600 min) tels qu'un niveau intermédiaire de la norme EN 45545-2 est satisfait. Toutefois, le flux énergétique critique à l'extinction (CFE) n'est pas mesuré.

Le besoin de matériaux toujours plus performants qui manifestent à la fois d'excellentes propriétés anti-feu et mécaniques, qui résistent au vieillissement, qui sont légers et maintenant écologiques est bien présent.

C'est le défi que relève l'invention avec une composition de résine thermoplastique à base de polycarbonate (PC) qui, en plus de satisfaire la norme anti-feu EN 45545-2, montre des propriétés mécaniques acceptables et peut en outre être recyclée. Une composition de l'invention peut être mise en oeuvre sous différentes formes, de préférence sous forme de plaques qui peuvent ensuite être thermoformées pour la réalisation de diverses pièces.

Ainsi, l'invention concerne une composition thermoplastique comprenant au moins :
a) une résine à base de polycarbonate, en une teneur de 60-70% (m/m) par rapport à la composition ;
b) un retardateur de flamme comprenant du phosphore choisi parmi les esters de phosphate aromatiques et leurs mélanges, présent(s) en une teneur de 5-15% (m/m) par rapport à la composition ;
c) un ou des polyorganosiloxanes, présent(s) en une teneur de 7-15% (m/m) par rapport à la composition; et
d) une charge inorganique à base de talc possédant un diamètre moyen D50 de 1-12 µm, de préférence 5-12µm, voire de 8-12µm, mesurée par une méthode de sédimentation par gravité telle que définie dans la norme ISO 13317-3, présente en une teneur de 15-20% (m/m) par rapport à la composition.

Par D50, on entend une taille des particules pour laquelle 50% de la masse de la charge organique possède une granulométrie inférieure et 50% de la masse de la charge organique possède une granulométrie supérieure.

L'invention est ci-dessous décrite plus en détails avec des caractéristiques particulières et/ou préférentielles qui peuvent être considérées seules ou en combinaison.

### Résine a)

La résine à base de polycarbonate peut comprendre ou peut consister en un ou plusieurs polycarbonates différents. Ils peuvent être choisis parmi les polycarbonates aliphatiques, les polycarbonates cycloaliphatiques, les polycarbonates aromatiques, tout copolymère d'au moins deux desdits polycarbonates et tout mélange d'au moins deux desdits polycarbonates et/ou desdits copolymères.

Pour illustrer les polycarbonates aliphatiques, on peut citer les poly(carbonate d'éthylène), les poly(carbonate de propylène), les poly(carbonate de pentène), les poly(carbonate d'hexène), les poly(carbonate de cyclohexène), les poly(carbonate d'octène). Pour illustrer les copolymères, on peut citer les copolymères de carbonate de propylène et de cyclohexène (20/80).

Avantageusement, le ou plusieurs desdits polycarbonates sont choisis parmi les polycarbonates et copolymères de carbonates aromatiques, notamment les bisphénols A, B, E, F, S, Z. Ainsi, ils peuvent être sélectionnés dans le groupe consistant en 2,2-bis(4-hydroxyphényl)propane (bisphénol A), 2,2-bis(4-hydroxy-3-méthylphényl)propane, 2,2-bis(4-hydroxyphényl)butane, 2,2-bis(4-hydroxyphényl)pentane, 2,2-bis(4-hydroxyphényl)-4-méthylpentane, 2,2-bis(4-hydroxy-3-méthylphényl)propane (bisphénol C), 2,2-bis(4-hydroxy-3-(1-méthyléthyl)phényl)propane, 2,2-bis(4-hydroxy-3-tert-butylphényl)propane, 2,2-bis(4-hydroxy-3-(1-méthylpropyl)phényl)propane, 2,2-bis(4-hydroxy-3-cyclohexylphényl)propane, 2,2-bis(4-hydroxy-3-phénylphényl)propane, 1,1-bis(4-hydroxyphényl)décane, 1,1-bis(4-hydroxyphényl)cyclohexane (bisphénol Z), 1,1-bis(4-hydroxyphényl)-1-phényléthane, bis(4-hydroxyphényl)phénylméthane, 1,1-bis(4-hydroxy-3-méthylphényl)cyclohexane, 1,1-bis(4-hydroxy-3,5-diméthylphényl)cyclohexane, 1,1-bis(4-hydroxy-3-(1-méthyléthyl)phényl)cyclohexane, 1,1-bis(4-hydroxy-3-tert-butylphényl)cyclohexane,1,1-bis(4-hydroxy-3-(1-méthylpropyl)phényl)cyclohexane, 1,1-bis(4-hydroxy-3-cyclohexylphényl)cyclohexane, 1,1-bis(4-hydroxy-3-phénylphényl)cyclohexane, 1,1-bis(4-hydroxy-3-méthylphényl)-1-phényléthane, 1,1-bis(4-hydroxy-3,5-diméthylphényl)-1-phényléthane, 1,1-bis(4-hydroxy-3-(1-méthyléthyl)phényl)-1-phényléthane, 1,1-bis(4-hydroxy-3-tert-butylphényl)-1-phényléthane, 1,1-bis(4-hydroxy-3-(1-méthylpropyl)phényl)-1-phényléthane, 1,1-bis(4-hydroxy-3-cyclohexylphényl)-1-phényléthane, 1,1-bis(4-hydroxy-3-phénylphényl)-1-phényléthane, 1,1-bis(4-hydroxyphényl)cyclopentane, 1,1-bis(4-hydroxyphényl)cyclooctane, 4,4'-(1,3-phénylènediisopropylidène)bisphénol, 4,4'-(1,4-phénylènediisopropylidène)bisphénol, 9,9-bis(4-hydroxyphényl)fluorène, 9,9-bis(4-hydroxy-3-méthylphényl)fluorène, 4,4'-dihydroxybenzophénone, 4,4'-dihydroxyphényl éther, 4,4'-dihydroxybiphényl, 1,1-bis(4-hydroxyphényl)-3,3-5-triméthylcyclohexane,and 1,1-bis(4-hydroxy-6-méthyl-3-tert-butylphényl) butane.

Comme indiqué précédemment, un des objectifs de l'invention est de fabriquer des pièces sous forme de plaques. Celles-ci peuvent être produites en série, elles sont prêtes à être façonnées en éléments d'équipement, par exemple équipement ferroviaire comme les parois, les portes, les plafonds, les sols, les sièges et tous les accessoires comme les tablettes, les porte-bagages. Cette transformation est réalisée par thermoformage. Il est connu que certains polymères parmi lesquels on compte les polycarbonates et les ABS, ainsi que leurs mélanges, sont particulièrement adaptés à cette technique de fabrication mettant en oeuvre le thermoformage. C'est ainsi que, selon une alternative, la résine peut comprendre ou peut consister en un mélange d'un ou plusieurs polycarbonates tels que définis ci-dessus et d'un ou plusieurs copolymères acrylonitrile butadiène styrène (ABS). L'apport d'ABS au(x) polycarbonate(s) confère à la résine une meilleure processabilité à chaud et notamment lors des étapes d'extrusion ou de thermoformage de la composition, ainsi qu'une résistance au choc à froid accrue et une meilleure imprimabilité.

Cet avantage de l'apport d'ABS est cependant contrebalancé par une diminution des propriétés anti-feu de la résine par rapport à une résine à base de polycarbonate(s) seulement. Cet inconvénient de l'ABS est connu. A titre d'exemple, l'article suivant, Congtranh Nguyen et al. Polymer Degradation and Stability 93 (2008) 1037-1043, rapporte une étude selon laquelle les auteurs ont comparé des retardateurs de flamme et notamment des esters de phosphate aromatique tels que le résorcinol bis-(phényl phosphate) (RDP), l'arylène-N,N'-bis(O,O'-diarylphosphoramidate) (N-RDP), le résorcinol bis-(phényl-N,N'-diarylphosphoramidate) (4N-RDP) et le résorcinol bis-(N,N'-diphénylphosphorodiamidate) en mélange avec une résine à base de polycarbonate (PC) et une résine à base d'acrylonitrile butadiène styrène (ABS). Les propriétés anti-feu sont évaluées sur la base des indices LOI (indice limite d'oxygène mesurant le plus faible pourcentage d'oxygène dans le mélange oxygène/azote requis pour favoriser la combustion d'un matériau) et UL-94 (indice d'inflammabilité déterminant la capacité d'un matériau à s'éteindre après avoir été enflammé). Le copolymère ABS est en fait difficile à ignifuger en particulier parce qu'il ne brûle pas et ne produit pas de charbon, Il n'est donc pas possible de déterminer l'indice UL-94. Il est effectivement extrêmement difficile de trouver un retardateur de flamme approprié à l'ABS.

Selon cette variante associant un ou des polycarbonates et un ou des ABS, on obtient une composition thermoplastique qui s'avère à la fois, facilement thermoformable (grâce à la présence d'ABS) et qui possède de bonnes performances anti-feu (malgré la présence d'ABS).

Ainsi, selon cette variante, des pièces sous forme de plaques peuvent être fabriquées en grand nombre pour être ensuite transformées à la demande par thermoformage en une grande diversité d'articles nécessaires à équiper des véhicules devant satisfaire des normes anti-feu exigeantes.

Une composition de l'invention peut aussi contenir d'autres polymères et par exemple le polytétrafluoroéthylène (PTFE) à titre d'agent anti-goutte, c'est-à-dire qu'il empêche le fluage et la formation de gouttes enflammées tombantes lors de la combustion du matériau.

La teneur de la résine dans la composition de l'invention va de 60-70% (m/m). Lorsque les ou les polycarbonates, de préférence aromatiques, sont associés à un ou des copolymères ABS, le ratio massique polycarbonate(s) / ABS va de 100/0 à 70/30.

### Retardateur de flamme phosphoré b)

Le retardateur de flamme b) comprend ou consiste en un ou plusieurs esters de phosphate aromatiques qui sont avantageusement choisis parmi le biphényl-4,4'-diyl tétraphényl bis(phosphate), le (1-méthyléthylidène)di-4,1-phénylènetétraphényl diphosphate (BDP), le triphényl-phosphate (TPP), le résorcinol bis(diphénylphosphate) (RDP), les esters mixtes de l'acide phosphorique et de [1,1'-bisphényl]-4,4'-diol] et de phénol.

Il est en une teneur de 5-15% (m/m) par rapport à la composition, en particulier de 7 à 12%, voire de 10 à 12%.

Sa teneur en phosphore va de préférence de 5-15% en masse par rapport à la masse du retardateur de flamme.

### Polysiloxane c)

Le ou les polyorganosiloxanes (POS) sont bien connus de l'homme du métier.

Avantageusement, le ou les polysiloxanes peuvent contenir des groupements aromatiques et peuvent alors être choisis parmi les polydiphénylsiloxanes, les polyméthylphénylsiloxanes, les polydiméthyldiphénylsiloxanes et les siloxanes cycliques. Ils peuvent aussi porter des groupements fonctionnels tels que ceux choisis parmi les groupements silanol, époxy, alcoxy, hydrosilyle ou vinyle. Ce type de silicone améliore les propriétés anti-feu.

Selon une autre variante, le ou les polyorganosiloxanes sont porteurs d'une ou de plusieurs fonctions (méth)-acryliques. Ces fonctionnalités acrylates sont incluses dans des radicaux liés à la chaîne (poly) siloxane par une liaison Si-C. De tels radicaux fonctionnels sont classiquement apportés par greffage sur le squelette silicone en bout (s) et/ou dans la chaîne.

Essentiellement, le ou les polyorganosiloxanes ont un rôle de retardateur de flamme.

Le silicone peut être une particule core-shell: silicone based core-shell rubbery comme par exemple un copolymère silicone-acrylate-méthacrylate de méthyle ou un copolymère silicone-acrylate-acrylonitrile-styrène. Cette particule possède des fonctions acrylates permettant la compatibilisation avec la résine PC/ABS et améliore les propriétés vis-à-vis des chocs.

Il est en une teneur de 7-15% (m/m) par rapport à la composition. Si elle est abaissée en-dessous de 7% (m/m), les propriétés mécaniques et notamment la résistance au choc et les propriétés anti-feu sont affectées. En particulier la teneur du retardateur de flamme c) va de 8 à 13%, voire de 9 à 12%.

### Charge inorganique d)

La charge inorganique comprend ou consiste en un talc possédant un diamètre moyen D50 de 1-12 µm, de préférence de 5-12 µm, voire de 8-12 µm, mesuré par une méthode de sédimentation par gravité telle que définie dans la norme ISO 13317-3. Selon une mise en oeuvre, la charge inorganique ne consiste qu'en un ou plusieurs talcs. Néanmoins, le ou les talcs peuvent être associés à d'autres matériaux de charge comme la silice ou des matériaux à base de bore tel que le borate de zinc.

La teneur de la charge inorganique d) va de 15-20% (m/m) par rapport à la composition. Si elle excède 20% (m/m), les performances anti-feu sont diminuées, en raison notamment de l'augmentation de la valeur MAHRE. En particulier la teneur de la charge organique d) va de 15 à 20%, de préférence de 16 à 18%.

Une composition préférée de l'invention comprend :
de 60-70% d'une résine a) consistant en un mélange de polycarbonate(s) aromatique(s) et d'acrylonitrile butadiène styrène (ABS) ;
de 5-15% d'un mélange de biphenyl-4,4'-diyl tétraphenyl bis(phosphate) et de (1-méthyléthylidène)di-4,1-phénylènetétraphényl diphosphate
de 7-15% d'un polysiloxane acrylique, et
de 15-20% d'un talc d),
les pourcentages étant exprimés en masse par rapport à masse de la composition.

De préférence, le polysiloxane acrylique est de type core-shell.

L'invention concerne aussi les applications d'une composition telle que définie ci-dessus.

Ainsi, fait partie de l'invention toute pièce qui peut être fabriquée à partir d'une telle composition. Une pièce de l'invention est avantageusement obtenue par extrusion ou injection d'une dite composition sous forme de plaque d'une épaisseur de 1 à 10 mm, de préférence de 2 à 6 mm. A cette fin et selon un procédé classique de plasturgie, la composition est extrudée sous forme par exemple de joncs puis mise en forme par extrusion ou injection, pour être adaptée à sa destination.

En vue en particulier de son utilisation dans l'équipement intérieur des véhicules ferroviaires et notamment des trains, elle présente les caractéristiques suivantes :
une valeur MAHRE de 90kW/m² au plus, déterminée selon la norme ISO 56060-1
une opacité des fumées telle que mesurée selon la norme ISO 5659-2, avec un Ds₍₄ₘᵢₙ₎ maximum à 300, un VOF₄ maximum de 600 et un CIT_{g} maximum de 0,9
CFE d'au moins 20 kW/m² déterminé selon la norme ISO 5658-2.

En plus de satisfaire cette norme, elle présente d'autres propriétés et notamment un poids faible, une bonne résistance aux chocs, et une possibilité d'être recyclée dans la même utilisation. S'agissant de ses propriétés mécaniques, elle possède une valeur de Choc Charpy (entaillé) caractérisant la résistance au choc à hautes vitesses de déformation, voisine, égale et de préférence supérieure à 10 kJ/m² (selon la norme ISO 179-1 et ISO 179-2).

La présente invention est ci-après illustrée à l'appui des exemples suivants.

Toutes les compositions présentées ci-après ont été préparées selon le procédé suivant.

Liste des ingrédients :
Résine a) : un mélange PC/ABS + PTFE
Retardateur de flamme phosphoré b) : les produits FP900L, FP600L (bisphénol A bis(diphény)phosphate commercialisé par ADEKA et TPP^{®} commercialisé par SIGMA-ALDRICH
Retardateur de flamme c) : silicone acrylique MR02^{®}, commercialisé par KANEKA
Charge inorganique d) Luzenac A60H, commercialisé par IMERYS

Les paramètres ont été mesurés selon les méthodes suivantes dans les conditions des normes indiquées précédemment pour chacun :
La mesure de l'indice MAHRE est réalisée au cône calorimètre sur plaques de 100 x 100 mm et d'une épaisseur de 2 à 6 mm selon la norme ISO 5660-1, ces plaques ont été obtenues par injection ou découpées dans des plaques extrudées.

La résistance au Choc Charpy entaillé est mesurée sur éprouvette entaillée 10 x 80 x 4 mm, selon la norme ISO 179-1. Ces éprouvettes ont été injectées ou découpées dans des plaques extrudées.

Le test fumée est effectué selon la norme ISO 5659-2 sur des plaques 100 x 100 mm et d'une épaisseur de 2 mm. Ces plaques ont été injectées ou découpées dans des plaques extrudées.

La détermination du CFE est réalisée pour une plaque extrudée ou injectée 800 x 155 mm, de plusieurs épaisseurs (2 à 6 mm), selon la norme ISO 5658-2.

### Exemple 1 : Formulation de compositions de l'invention et hors invention

Sept formulations de compositions sont préparées avec des talcs [ingrédient d)] de différentes granulométries et en variant les quantités de FP600L ou/et FP900L [ingrédient b)] et sont reportées dans le [Tab. 1] ci-dessous.

Les talcs sélectionnés, tous commercialisés par IMERYS, sont les suivants :
Jetfine^{®} 3CA avec un diamètre moyen D50 de 1 µm
Luzenac A20C avec un diamètre moyen D50 de 3,7 µm
Luzenac A60H avec un diamètre moyen D50 de 9,9 µm
HAR^{®}W92 avec un diamètre moyen D50 de 2,1 µm

**Tableau 1]**

| Formulation Ingrédient* | A16 | A31 | A32 | A33 | A35 | A37 | A38 |
|---|---|---|---|---|---|---|---|
| Résine a) PC/ABS | 49,4/12,4 | 49,4/12,4 | 49,4/12,4 | 49,4/12,4 | 57.9/14.5 | 49,4/12,4 | 47.8/11.8 |
| PTFE | 0,3 | 0,3 | 0,3 | 0,3 | 0,4 | 0,3 | 0,3 |
| Jetfine^{®} 3CA | 19.4 | | | | 5.7 | 19.4 | 18.8 |
| Luzenac A20C | | 19.4 | | | | | |
| Luzenac A60H | | | 19,4 | | | | |
| HAR^{®} W92 | | | | 19.4 | | | |
| Silicone MR02^{®} | 7,6 | 7,6 | 7,6 | 7,6 | 8.9 | 7.6 | 7.4 |
| FP900L | 3.5 | 3,5 | 3.5 | 3.5 | 4.1 | | |
| FP600L | 7,3 | 7,3 | 7.3 | 7,3 | 8.5 | 10.8 | 13.7 |

| | | | | | | | |
|---|---|---|---|---|---|---|---|
| * Les proportions des ingrédients sont exprimées en pourcentage massique par rapport à la composition finale. | | | | | | | |

### Exemple 2 : Propriétés des compositions de l'Exemple 1

Chacune des compositions de l'Exemple 1 est mise en forme de plaques de 2 mm d'épaisseur, par extrusion ou injection, et est ensuite testée pour la mesure du paramètre anti-feu MAHRE et de la valeur de Choc Charpy entaillé.

Les résultats obtenus sont reportés dans le [Tab. 2] ci-dessous.

Les résultats du MAHRE montrent une disparité selon les formulations et notamment selon le type de talc et les différentes teneurs. Il est difficile d'atteindre la valeur de 90 kw/m². La granulométrie a une forte influence sur les résultats MAHRE.

**Tableau 2]**

| Composition Paramètre | A16 | A31 | A32 | A33 | A35 | A37 | A38 |
|---|---|---|---|---|---|---|---|
| Choc Charpy entaillé (kj/m²) | 17 | 10 | 9 | 9 | 42 | 11 | 9 |
| MAHRE (kW/m²) | 94-100 | 82 -99 | 72-91 | 100 | 115-106 | 105-98 | 95 |

### Exemple 3 : Formulation de compositions de l'invention

La formulation de 6 compositions de l'invention est décrite dans le [Tab. 3] ci-dessous.

**Tableau 31**

| Formulation Ingrédient* | A40 | A41 | A42 | A43 | A44 | A45 | A45M |
|---|---|---|---|---|---|---|---|
| Résine a) PC/ABS | 49,4/12,4 | 49,4/12,4 | 49,4/12,4 | 49,4/12,4 | 49,4/12,4 | 49,4/12,4 | 47.1/11.8 |
| PTFE | 0,3 | 0,3 | 0,3 | 0,3 | 0,3 | 0,3 | 0,3 |
| Luzenac A60H | 16,7 | 16,7 | 19,4 | 16,7 | 16,7 | 16,7 | 17,9 |
| Silicone MR02^{®} | 7,6 | 7,6 | 7,6 | 7,6 | 7,6 | 10,4 | 11,3 |
| FP900L | | 3,5 | | | 6,3 | 3,5 | 4,6 |
| FP600L | 7,3 | 7,3 | 10,8 | 7,3 | 7,3 | 7,3 | 7,0 |
| TTP^{®} | 6,3 | 2,8 | - | 6,3 | | | |

| | | | | | | | |
|---|---|---|---|---|---|---|---|
| * Les proportions des ingrédients sont exprimées en pourcentage massique par rapport à la composition finale. | | | | | | | |

### Exemple 4 : Propriétés des compositions de l'invention

Chacune des compositions de l'Exemple 3 est mise en forme de plaques de 2 mm d'épaisseur, par extrusion ou injection, et est ensuite testée pour la mesure du paramètre anti-feu MAHRE et de la valeur de choc Charpy entaillé.

Les résultats obtenus sont reportés dans le [Tab. 4] ci-dessous.

**Tableau 4]**

| Composition Paramètre | A40 | A41 | A42 | A43 | A44 | A45 | A45M |
|---|---|---|---|---|---|---|---|
| Choc Charpy entaillé (kj/m²) | 8,6 | 8 | 10 | 9,7 | 9,5 | 12,8 | 10 |
| MAHRE (kW/m²) | 73-81 | 78 - 81 | 76 - 79 | 79 - 84 | 73 - 78 | 80 - 75 | 81 |

Elles présentent toutes un indice MAHRE satisfaisant, les compositions A42, A45 et A45M possédant les meilleures caractéristiques mécaniques.

Les paramètres d'opacité des fumées ont été mesurés pour les compositions A45 et A45M ; ils sont reportés dans le [Tab. 5] ci-dessous.

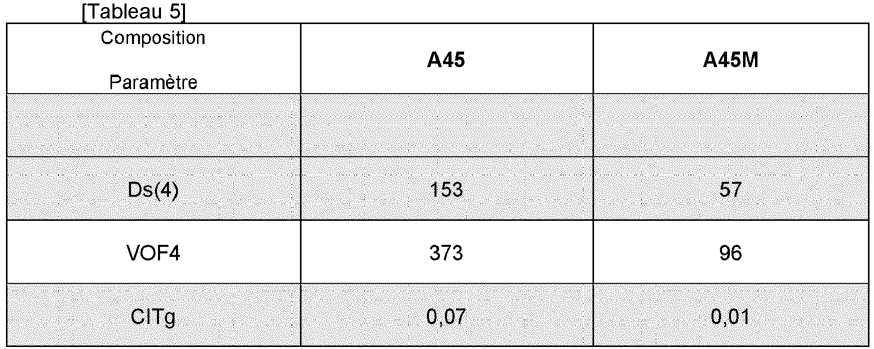

Le paramètre CFE n'a été mesuré que pour la composition A45M, il est de 22-22,4.

## Revendications

1. Composition thermoplastique comprenant au moins :
a) une résine à base de polycarbonate(s), en une teneur de 60-70% (m/m) par rapport à la composition ;
b) un retardateur de flamme comprenant du phosphore choisi parmi les esters de phosphate aromatiques et leurs mélanges, présent(s) en une teneur de 5-15% en masse par rapport à la masse de la composition ;
c) un ou des polyorganosiloxanes, présent(s) en une teneur de 7-15% (m/m) par rapport à la composition; et
d) une charge inorganique à base de talc possédant un diamètre moyen D50 de 1-12 µm, de préférence de 5-12 µm, voire de 8-12 µm, mesuré par une méthode de sédimentation par gravité telle que définie dans la norme ISO 13317-3, ladite charge inorganique étant présente en une teneur de 15-20% (m/m) par rapport à la composition.

2. Composition selon la revendication 1, **caractérisée en ce que** le ou plusieurs desdits polycarbonates de la résine a) est/sont choisi(s) parmi les polycarbonates aromatiques et les polycarbonates aliphatiques.

3. Composition selon la revendication 1 ou 2, **caractérisée en ce que** la résine a) est choisie parmi les polycarbonates et les mélanges de polycarbonate(s) et d'acrylonitrile butadiène styrène (ABS).

4. Composition selon la revendication 3, **caractérisée en ce que** le ratio massique du mélange polycarbonate(s) / acrylonitrile butadiène styrène (ABS) va de 100/0 à 70/30.

5. Composition selon l'une quelconque des revendications 1 à 4, **caractérisée en ce que** le retardateur de flamme phosphoré b) a une teneur en phosphore de 5-15% en masse par rapport à la masse du retardateur de flamme.

6. Composition selon l'une quelconque des revendications 1 à 5, **caractérisée en ce que** le retardateur de flamme phosphoré b) est choisi parmi le biphenyl-4,4'-diyl tétraphényl bis(phosphate), le (1-méthyléthylidène)di-4,1-phénylènetétraphényl diphosphate, le triphényl-phosphate, le résorcinol bis(diphénylphosphate, et leurs mélanges.

7. Composition selon l'une quelconque des revendications 1 à 6, **caractérisée en ce que** le ou plusieurs des polyorganosiloxanes c) sont des polyorganosiloxanes porteurs d'une ou plusieurs fonctions choisies parmi les fonctions acryliques, les groupements aromatiques, silanol, époxy, alcoxy, hydrosilyle et vinyle.

8. Composition selon l'une quelconque des revendications 1 à 7, **caractérisée en ce qu'**elle comprend :
de 60-70% d'un mélange a) de polycarbonates et d'acrylonitrile butadiène styrène (ABS) ;
de 5-15% d'un mélange de biphenyl-4,4'-diyl tétraphenyl bis(phosphate) et de (1-méthyléthylidène)di-4,1-phénylènetétraphényl diphosphate,
de 7-15% d'un polysiloxane acrylique de préférence de type core-shell, et
de 15-20% d'un talc d),
les pourcentages étant exprimés (m/m) par rapport à la composition.

9. Pièce obtenue à partir d'une composition selon l'une quelconque des revendications 1 à 8.

10. Pièce selon la revendication 9, sous forme de plaque d'une épaisseur de 1 à 10 mm, de préférence de 2 à 6 mm, obtenue par extrusion ou injection d'une dite composition.

11. Pièce selon la revendication 9 ou 10, **caractérisée en ce qu'**elle présente les caractéristiques suivantes :
une valeur MAHRE de 90kW/m² au plus,
une opacité des fumées avec un Ds₍₄ₘᵢₙ₎ maximum à 300, un VOF₄ maximum de 600 et un CIT₉ maximum de 0,9
un flux énergétique critique à l'extinction (CFE) d'au moins 20 kW/m².

12. Pièce selon l'une quelconque des revendications 9 à 11, destinée à l'équipement intérieur des véhicules ferroviaires et notamment des trains.

13. Utilisation d'une composition selon l'une quelconque des revendications 1 à 8, pour la fabrication d'équipement des véhicules ferroviaires et notamment des trains.
